# EUROPEAN PATENT SPECIFICATION

(11) **EP 0 910 914 B1**
(45) Date of publication and mention of the grant of the patent: **15.09.2004**
(21) Application number: 97930659.4
(22) Date of filing: 07.07.1997
(51) Int. Cl.: H04M 1/72, H04M 3/54

(54) **CORDLESS TELEPHONE APPARATUS**
SCHNURLOSER TELEFONAPPARAT
TELEPHONE SANS FIL

(30) Priority: 11.07.1996 EP 96305601
(43) Date of publication of application: 28.04.1999
(73) Proprietor: BRITISH TELECOMMUNICATIONS public limited company, London EC1A 7AJ (GB)
(72) Inventor: WARBURTON, Robert, John, Suffolk NR35 2SX (GB); BUTTERY, Stephen, John, Essex CO11 1NF (GB)
(74) Representative: Lidbetter, Timothy Guy Edwin
(86) International application number: PCT/GB1997/001848
(87) International publication number: WO 1998/003002

(56) References cited:
- EP-A- 0 445 887
- EP-A- 0 712 230
- EP-A- 0 740 482
- WO-A-92/04798
- WO-A-93/16549
- WO-A-93/26132
- WO-A-96/07286
- GB-A- 2 297 455
- US-A- 5 222 123

## Description

This invention relates to cordless telephone apparatus, and in particular to customer premises equipment (CPE) for use in supporting an enhanced service to the customer. The invention has particular application for a service allowing a user to use both a cordless or fixed telephone system and a cellular telephone system interchangeably, efficiently and flexibly, without the need for complex procedures.

The essential distinction between a cordless system and a cellular system is that in general a cordless handset works in conjunction with a specific radio base station connected to a fixed telecommunications exchange line, whilst a cellular handset will communicate with whichever of a number of radio base stations currently provides the best radio link. Cellular systems require handover of a handset from one base station to another as the handset and its user move around the coverage area. Some large scale cordless systems, known as 'Wireless PBX', offer conventional private exchange services and allow use of a handset with different base stations within a small defined area such as a single building or campus, but incoming calls are always routed to the same (fixed) exchange line.

If a user has access to both cordless and cellular systems it is preferable for the user to use the cordless system dedicated to him whenever possible, so that the available capacity of the cellular system can be used by other users, and because cordless systems are simpler and therefore less expensive to provide. The cordless system may also offer features not available in the cellular network. Cordless and cellular handsets both generally operate using radio communication but other wireless communication media such as ultrasound or optical signals (e.g. infrared) are sometimes used, and the term "wireless" as used in this specification embraces any such communication medium.

It will be seen from the foregoing that cordless systems have some features in common with truly "fixed" systems and some in common with fully "mobile" systems such as cellular systems.

Dual purpose handsets, capable of operating on both cordless and cellular systems have been developed. Examples are described in GB2225512, WO93/16534, WO93/16348, WO93/16549, WO93/16560 and WO94/00946 (all Motorola), EP 0660626 (Nokia), and WO95/01070 (Ericsson). Some of these automatically switch between cordless and cellular operation according to which type of base station can be detected by the mobile unit. However, for incoming calls the user of such a handset must have two telephone numbers; one for each system, and the user must arrange that calls made to the number corresponding to the system on which the user is currently not operating are nevertheless answered, for example by setting up a call diversion to the other number. A call diversion is an instruction transmitted to the control layer of the telecommunications system instructing that all calls to a given number (usually that of the line from which the instruction comes) should be switched to a different specified number. It should be distinguished from call transfer, in which an individual call already in progress is redirected to another line. The latter service is not yet generally available on public switched networks.

It is therefore necessary to identify whether the or each handset is in wireless communication with its cordless base station, in order to determine whether to route calls to it by the normal fixed exchange line, or whether to route calls by the cellular route. In some of the prior art dual mode systems discussed above, the handset senses when it is out of contact with its cordless base station, and initiates call diversion to the cellular number accordingly. However, this is difficult to achieve because the handset is not able to communicate with the exchange line to set up the diversion, having just gone out of range. It therefore requires a cellular call to be made to set up the diversion on the fixed network, which in turn requires that the fixed exchange has the capability to set up such a call diversion for calls dialled to one number (the fixed line), on instructions from another (the cellular phone).

For security, many Call Diversion services can only be set up from the number from which the calls are to be diverted. For those services which can be set up remotely (e.g. from the number to which the calls are to be diverted), the procedures are more complex, since the number from which the diversion is to take place must be identified and suitable precautions taken to ensure that inadvertent or malicious diversion of calls to the other users' numbers are not set up.

If the handset is out of contact with both systems (for example because it is switched off) it may be desirable to have calls diverted to a default number. In these circumstances it is clearly impossible to initiate the diversion from the handset.

Moreover, if the handset is one of several associated with the cordless base station, diversion to the cellular number of calls intended for the fixed exchange line would prevent the other handsets receiving incoming calls.

A system is disclosed in United States Patent no 5,222,123 (Brown et al) in which a cordless telephone can be used selectively in conjunction with either a dedicated base station or a selected other base station. In cordless telephone systems, a base station and handset exchange coded paging signals when a call is initiated by either of them, in order to ensure that the handset is properly in communication with the correct base station, and in particular to prevent accidental or malicious interception of calls by any other user's handset which may be nearby. This system makes use of the fact that although the handset is not in communication with the fixed exchange line when it goes out of range of the base station, the base station itself is still connected to the network. This feature is used to arrange for incoming calls to be handled differently according to whether the cordless handset is present or absent. The user sends an instruction to a central office to direct calls made to his cordless telephone to be routed through a base station other than the dedicated base station. This temporary base station then periodically pages the cordless telephone and the diversion is maintained until the temporary base station fails to detect the cordless telephone, at which point it transmits an instruction to the central office to cancel the call diversion and allow calls to be routed by way of the dedicated base station once again. This system allows automatic cancellation of call diversion, but call diversion has to be initiated manually.

According to the invention there is provided a cordless telephone base station comprising means for connection to an exchange connection of a telecommunications network; wireless communication means for establishing wireless communication with one or more handsets to enable telephone communication between the handsets and the telecommunications network; paging means for transmitting a wireless paging signal to the or each handset; and handset detection means for detecting a response, transmitted by the handset, to such a paging signal; wherein the base station has call handling means for generating call diversion instructions and means for transmitting said call diversion instructions over the exchange connection to cause the network to direct incoming calls to the said exchange connection or to a second connection according to the presence or absence of the handsets as detected by the paging signal responses, characterised in that the second connection is specified in the call diversion instructions generated by the call handling means.

Another aspect of the invention provides a method of controlling the routing of calls directed over a telecommunications network to a cordless telephone base station connected thereto and arranged for wireless communication with one or more cordless handsets, wherein the base station transmits wireless paging signals to one or more of said handsets, detects the presence or absence of responses to said paging signals, generates call diversion instructions, and transmits said call diversion instructions over the exchange connection to cause the network to direct incoming calls to the said exchange connection or to a second connection, according to the detected presence or absence of said paging signals, characterised in that the second connection is specified in the call diversion instructions generated by the call handling means.

This invention allows the automatic creation of call diversion to a predetermined number. In the preferred embodiment the handset is a dual purpose handset of the kind already described, and the predetermined number is the cellular telephone number associated with the handset.

Preferably, the paging means is arranged to send paging signals periodically, and is controlled by the detection means such that if the detection means detects a response to a first paging signal, but fails to detect a response to the next paging signal, further paging signals are transmitted by the paging means at a shorter time interval. The detection means may comprise means for measuring the strength of the response signal detected, and the paging means being arranged to transmit paging signals at a rate related to the strength of the response signal.

If the handset is absent, i.e. out of wireless communication with the base station, incoming calls can, for example, be diverted to a cellular number associated with the same handset. In systems with more than one handset, the system may be configured so that calls are diverted only if none of the handsets are present. Alternatively, if incoming calls intended for different handsets can be distinguished (e.g. using the Called Number Identity service described elsewhere in this specification), call diversion may be arranged for those individual handsets which are absent, with other calls continuing to be received. Other permutations can be envisaged, for example if Handset A is absent, ring Handset B but not C: if both A and B are absent, arrange for call diversion.

The call handling means may have signal detection means for detecting signalling received from the network indicative of the calling party's identity and/or preferences; and connection selection means arranged to attempt communication with one of several handsets capable of wireless communication with the base station, the handset being selected in response to signals detected by the signal detection means and handset detection means. The base station may further comprise caller interface means, the caller interface means comprising option generation means for generating and transmitting messages inviting the caller to transmit additional signalling to select one of the available handsets, and caller response means responsive to such signalling to select such a connection. The signal detection means may have means for detecting signalling indicative of the preferences and/or the identity of the calling party and the option generation means can be controlled to offer connections (for example to different handsets, or to an answering machine) in response to signals detected by the signal detection means indicative of the calling party's identity and/or preferences. This signal detection means can be responsive to a ringing cadence or pattern, indicative of a calling party preference.

The base station may have programming means for programming the option generation means to select which connections are offered, according to the called and/or calling numbers detected.

In the form described the invention requires no modification to the existing telephone network, provided that the Call Diversion service is available. For some of the preferred features, Calling Line Identity (CLI) or Called Number Identity (CNI) are also required.

An embodiment of the invention will now be described with reference to the accompanying drawings, in which:
Figure 1 shows a customer premises equipment (telephone apparatus), and associated telephone handsets and exchange lines, according to the invention; Figure 2 shows a controller and ancillary equipment forming part of the telephone apparatus of Figure 1;
Figure 3 shows a call processor and ancillary equipment also forming part of the telephone apparatus of Figure 1.

This embodiment also incorporates the invention of our co-pending European application 97930661.0 (published as International Patent Specification WO98/03004).

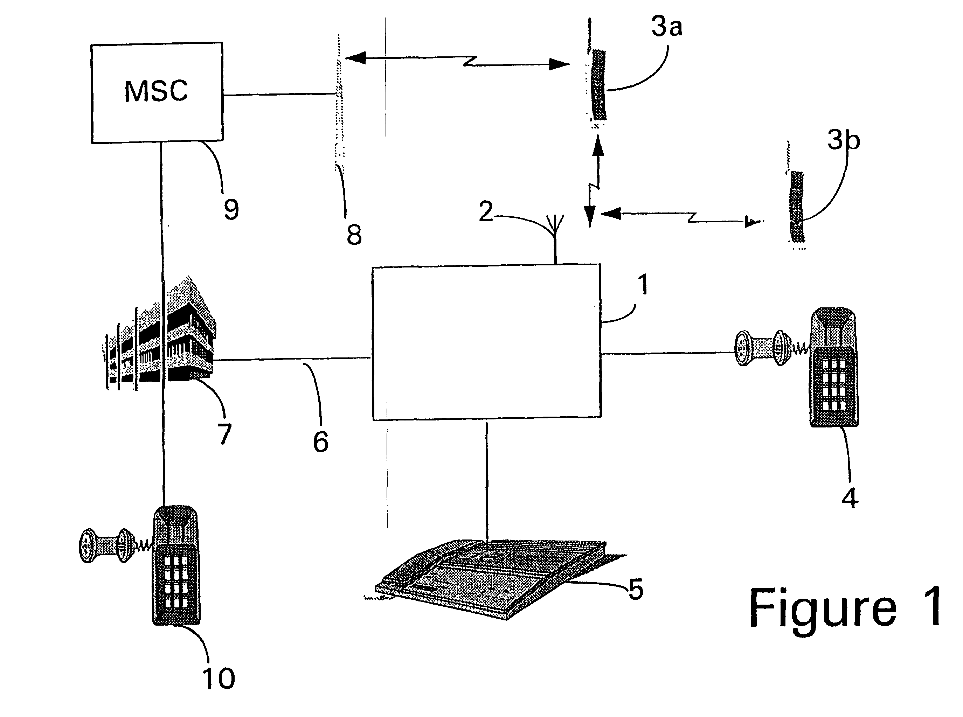

Figure 1 shows a customer base station apparatus 1 according to the invention having a radio antenna 2 for communication using a cordless protocol with mobile stations 3A, 3B and fixed connections to a fixed telephone instrument 4 and an answering machine 5. The apparatus 1 is connected by means of a fixed exchange line 6 to a conventional public switched telecommunications network (PSTN) 7. For incoming calls over the line 6 two separate directory numbers, referred to hereafter as the "primary number" and the "alternative number", are available. The mobile units 3a and 3b may also communicate (as shown for mobile unit 3a) with a cellular radio system using a cellular protocol such as GSM (Global System for Mobile Telecommunications) by means of a base transceiver site 8 (BTS) and a mobile switching centre (MSC) 9 which is connected to the fixed switching system 7. Incoming calls can be made to the users of the equipment 1 by callers such as caller 10 connected to the switched telecommunications system 7 (or indeed the mobile system 9) in the conventional way. The handset 3a also has a telephone number in the cellular system, referred to hereinafter as the "remote number".

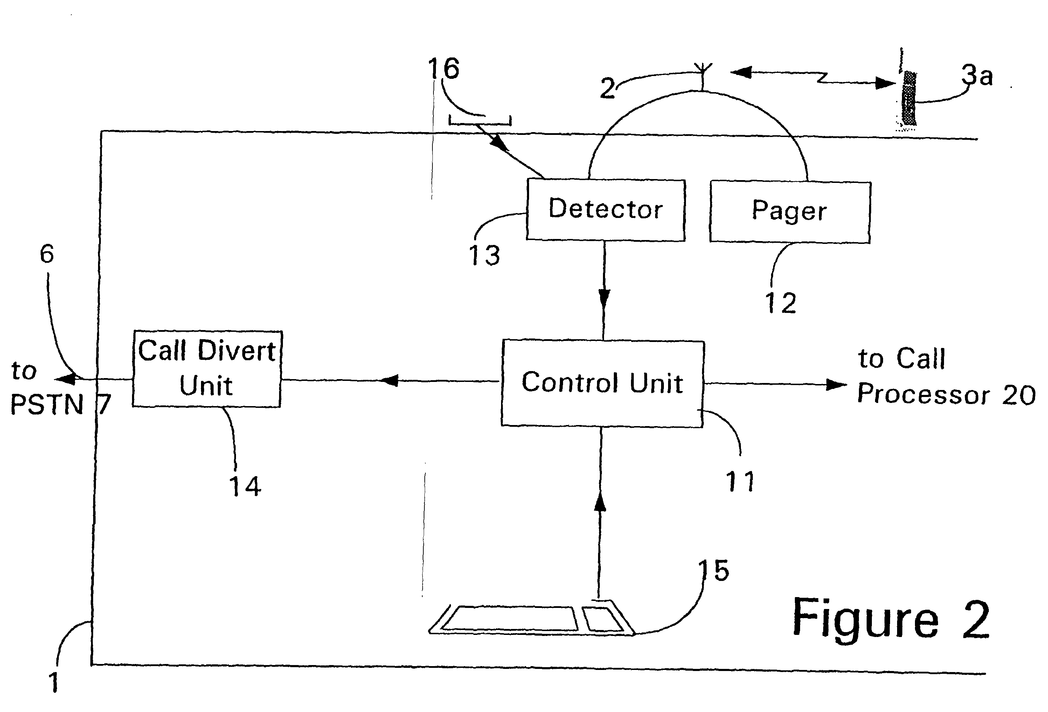

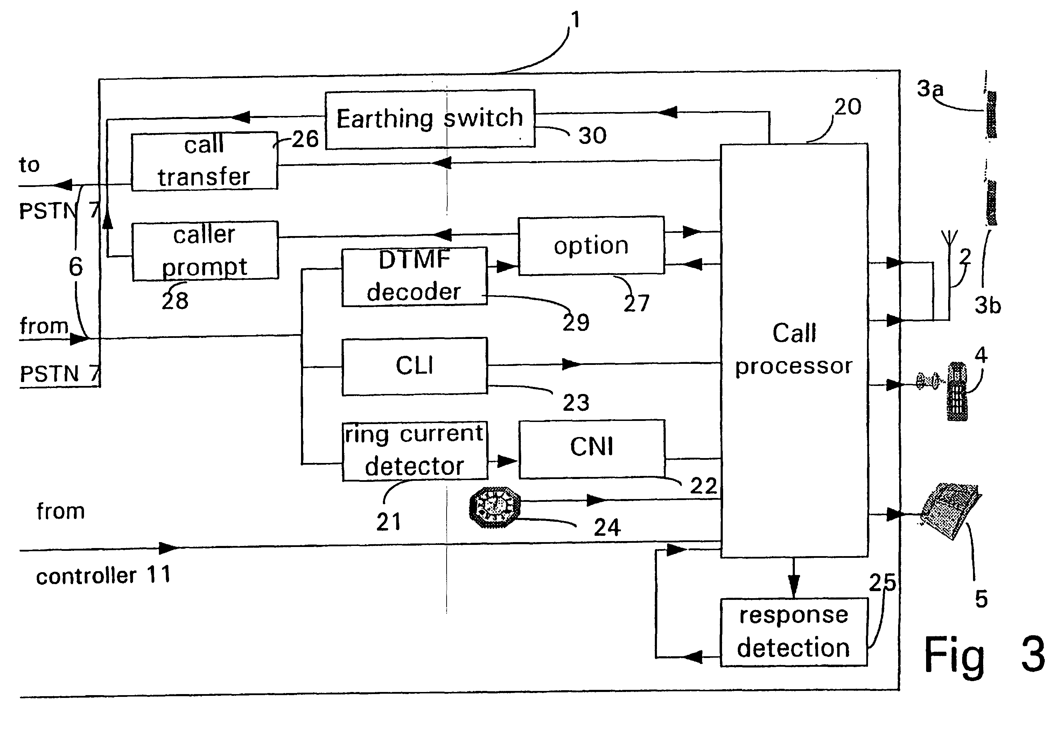

Figure 2 shows in more detail part of the telephone apparatus 1, specifically a control unit 11. The control unit 11 has input from a cordless handset detector 13 and from a manual input unit (here embodied as a keyboard 15). Although illustrated here as a separate unit, the manual input may be provided using the keypad of one of the telephones 3a, 3b, 4. The detector 13 in turn has input from a cordless handset cradle 16 and from the radio antenna 2. A pager unit 12, for transmitting paging signals to the cordless handsets through the antenna 2 is also provided. The control unit 11 has two outputs, firstly to a call divert unit 14 which in turn has an output to the PSTN 7 by way of exchange line 6. The second output from the control unit 11 is to a call processor unit 20 shown in Figure 3.

Figure 3 shows the call processor unit 20 and various ancillary units which also form part of the apparatus 1. As well as the aforementioned input from the control unit 11, the call processor unit also has a called number identity (CNI) unit 22 and a calling line identity (CLI) unit 23, both of which detect incoming signals from the exchange line connection 6. In the former case, the exchange line 6 feeds a ringing current detector 21, which identifies the presence of ringing current and passes a signal indicative of the ringing current to the called number identity unit 22.

The call processor 20 is selectively connectable to the antenna 2, telephone 4 and answering machine 5 for routing incoming calls, in response to the various inputs to the call processor.

The call processor 20 is under control of a clock 24. The call processor 20 is also associated with a response detection unit 25, which returns an input to the call processor 20. In this embodiment the call processor 20 also has an output to a call transfer unit 26, which in turn has an output to the exchange line 6.

The call processor 20 also has an output to an option processor 27 which in turn has an output to a caller prompt generator 28 which itself has an output to the exchange line 6. A further input from the exchange line 6 leads to a DTMF decoder 29 which in turn feeds back to the option processor 27 to provide a further input to the call processor 20.

The call processor unit 20 also controls an earthing switch 30 which causes one or other wire of the PSTN connection 6 to be connected to "earth" (zero) potential, thereby simulating the operation of the "recall" button on a conventional telephone. As will be described below, this switch may be replaced by a generator of a 'loop disconnect' signal, or any other signal recognisable as a "recall" instruction by the PSTN 7.

Telephone network services are being developed which allow several users to make use of the same exchange line and for the various users of the service to have personalised services although sharing the same line. The call handling unit 1 is designed to make use of these services, in many cases operating them automatically instead of by means of user input, in order to provide additional services, and in particular to allow call diversion, selective call transfer and other call handling functions to be performed in response to the nature of incoming calls, with minimal additional input from the user himself. In particular the system is designed to allow the user of a dual mode cordless/cellular handset to be reachable by the same telephone number whether he is within range of his cordless base station or not, but by the most economical route, without complex inputs by either the called or calling party. The system also allows the user to handle individual calls in a manner most appropriate to the nature of the calling and called parties automatically, without the need for any specialised input from the user once the system has been configured to the user's individual requirements.

The call handling unit 1 described below operates in conjunction with conventional cordless and/or fixed handsets, and a conventional answering machine 5. However, if preferred the answering machine functionality may be incorporated within the call handling unit 1. Further telephone apparatus may be connected to the exchange line 6 in parallel with the unit 1. In one possible arrangement, the call-handling unit 1 replaces the base station of a conventional domestic cordless system, connected in parallel with one or more fixed telephones. In this arrangement the fixed telephones would not be controlled by the unit 1.

The call handling unit 1 is intended to work with existing public switched telephone networks and cellular radio networks, using network services which already exist or have been proposed for introduction in the near future. A telephone network operator would therefore offer the call handling unit 1 and a suitable package of its existing network services in order to provide all the necessary functionality. Some of these network services will now be described.

### Calling Line Identity (CLI)

A service whereby a signal, indicative of the origin of a call, is transmitted by the network to the called number. Apparatus suitable for converting these signals for display of the caller's identity can be provided, giving the called party the ability to identity a caller and to choose whether to answer the call, greet the caller by name when answering, or (if the apparatus stores the display after the caller has rung off) to return a call if the called party is unable to answer it at the time it is made. Systems have been developed which allow the use of "Calling Line Identity" (CLI) to determine whether a call is to be answered, and which handset to ring of several wired to a control unit. An example of such a system is disclosed in International Patent Specitication no. WO95/23526 (SNI Innovation). However, this only allows calls to be routed to selected handsets connected to the routing apparatus, for example to ensure that incoming calls are routed to specified extensions, for example to avoid disturbance to users of the other extensions. in rooms which are currently occupied.

### Called Number Identity (CNI)

A service now being introduced by some telecommunications operators in which more than one different telephone number is served by the same exchange line. In order to identify to the called party the number that has been dialled the exchange arranges that the ringing tone varies in a characteristic way according to which number has been dialled. This is known as "ringing cadence". For example, if the number dialled is the "primary number" the exchange causes ringing current to be transmitted in a "double ring", repeated periodically as is conventional in telephone systems in for example the United Kingdom, whereas if the "alternative number" is dialled a single ring, repeated periodically, las is conventional in the United States and some European countries) is initiated by the exchange. Other ring cadence variations may be used; for example patterns of short and long rings, triple rings, etc. The called party, on hearing the ringing pattern or cadence, will recognise which number has been dialled and therefore the type of call which is being made; for example the numbers could be allocated to different members of the household, or alternatively they may be a business and domestic (private) number for the same person.

### Call Diversion

A network service in which a user can divert incoming calls to another number by programming the exchange to reroute the calls, for example by transmitting DTMF (dual tone multiple frequency) tones by means of keystrokes on his telephone keypad. When the service is activated, the PSTN routes all incoming calls to the new number

### Call Transfer

In this service an incoming call made to an exchange line is intercepted, such that the called party can arrange for the calling party to be connected to a third party, the original connection then being released. This service is commonly provided in private exchanges (PBX), in order to allow incoming calls to be transferred from one extension line to another. In general the transfer is effected by "parking" the incoming call using an earthing key (usually known as the "recall" button), and then dialling the new number. Normally this takes place whilst the call is in progress (i.e. after the call has been answered), but in the present embodiment the apparatus is arranged to carry out the transfer as soon as the connection to the called party is made, and before ringing tone is applied to the handset. Call Transfer is distinct from Call Diversion in that Call Diversion causes all incoming calls to be intercepted by the exchange and routed directly to the remote number, without the involvement of the exchange line associated with the number dialled. Call Diversion involves less signalling overhead, and will operate even if the line is already in use, but it is less versatile as it does not permit the called party to select different treatment for different calls. Call Transfer is not yet generally available on public switched networks.

The term "routing", as used in this specification, includes both call transfer and call diversion. It also embraces the connection of a call by a base station to one or other of the apparatus associated with it (e.g. an answering machine or a cordless handset).

The detailed operation of the system will now be described. The generation by the control unit 11 of call handling settings to be used by the processor 20 will be described first. A user input 15 (illustrated as a keyboard) allows the user to programme the call processor 20 to handle different types of call in different ways according to a number of criteria which the user may wish to apply. For example the user may wish to distinguish between incoming calls made on the "primary" number and those made on the "alternative" number (which the call processor 20 can distinguish by the different ringing cadences as will be described), or by the identity of the caller making the call (using CLI). The user may wish to select that the only calls to be routed to the cellular telephone number when the mobile station 3a is not within range of the cordless base station apparatus 1 are those directed to the primary number and originating from certain selected directory numbers. This would ensure that only business calls from certain selected callers would reach him: less urgent calls, and calls intended for other users or other handsets, being handled by the base station e.g. by being routed to an answering machine 5. Routing to directory numbers other than the user's own cellular telephone number is also possible. The user input 15 may be used to programme the controller on a real-time basis when the user takes his handset out of, or back into, range of the base station 1. However it may also be programmed in advance, either to operate on a regular time of day/day of week basis (for instance routing business calls to the answering machine outside business hours, or maybe according to a predetermined schedule depending on the known future schedule of the user. The user input 15 may also be used to configure that certain categories of call (for instance a specific CLI) is not to be answered at all. This would be useful for example as an automatic screening of nuisance calls from a known source.

The table below shows an exemplary pattern of call handling which may be programmed into the call processor 20 by means of the control unit 11 and user input 15. For illustrative purposes, the "primary number" may be considered to be the user's business number and "alternative number" the user's private number, but they may be used in any other way that the user requires, for example to identify calls to different household members.

| | | |
|---|---|---|
| CNI→ | PRIMARY NUMBER | ALTERNATIVE NUMBER |
| CLI | | |
| ↓ | | |
| Category 1 | Follow handset 3a | Any handset on base |
| Category 2 | Handset 3a if on base | Handset 3b if on base |
| Category 3 | No answer | No answer |
| Default | Answering machine | Any handset on base |

Four categories of calling line identity are identified in Table 1, identified as "category 1", "category 2", "category 3" and "Default". "Default" is used for any Calling Line identity not specifically identified under any of the other categories.

Category 1 CLIs may be for example business associates whom the user of the primary number wishes to be able to reach him using his cellular telephone 3a even if he is away from base. In this case the call processor 20 will be programmed such that if the handset 3a is not detected by the detector 13, as will be described below, the call is transferred by way of the PSTN and the mobile network 8 and 9 to access the user handset 3a on the remote number by means of the cellular network. However, the associates may also wish to contact the location rather than the person and they may do this by dialling the "alternative number" instead of the "primary number".

For Calling Line Identities in Category 2, the primary number and alternative number are used in this example to contact different members of the household etc, by ringing different handsets.

Category 3 is, for example, the Calling Line Identity of a known nuisance caller to whom none of the users wish to answer any calls. In existing systems, a user could use a Calling Line Identity display to determine whether to lift the receiver, but the telephone would nevertheless ring. The called party has to check the CLI display before answering the call, and an answering machine, if fitted, would nevertheless answer the call if the user does not pick it up. However, even the mere knowledge that a nuisance caller is attempting to call can be very distressing to the victims of such calls. In the described embodiment the system would not route the call to any handset (or other device such as the answering machine 5), and would simply present the caller with ringing tone, without the called party even being aware of it.

Finally, there is a default condition for Calling Line Identities not falling into any of the specified categories, and here again the default condition may be routed differently according to whether the "primary number" or "alternative number" is dialled.

The settings set by the control unit 11 may include a hierarchy of conditions for use in turn, in the event that the preferred condition shown in Table 1 is not answered. In each case the hierarchy should eventually finish at either the answering machine or "no answer". It should also be recognised that Table 1 shows the settings at a particular time. The controller may be set to programme the call processor to vary the settings according to a predetermined schedule which may be a diary system or a regular "time of day" schedule. For example all calls may be routed to the answering machine during the night.

The control unit 11 has a second input from a handset detector 13. This allows the controller to set the call processor 20 to answer calls or divert them to the cellular number according to whether the dual mode handset 3a is within range of the cordless base station antenna 2.

A paging system is used to determine whether the handsets 3a, 3b are within wireless communication range of the cordless base station antenna 2. This is an adaptation of the known cordless paging systems which operate when a call attempt is being made to or from the handset. In this modified arrangement the pager 12 causes an interrogation signal to be sent periodically, whether or not a call attempt is being made, which the handset will respond to in the normal way if it is in within range. The detector 13 determines whether the signal from the pager 12 has been responded to, and if the handset is newly absent, or newly present it initiates or cancels call diversions accordingly. In order to avoid frequent resetting of the call diversion system on and off, which may occur if the handset 3a is close to the limits of range of the base station 2, the call routing function may be arranged to be initiated by the control unit 11 only if a predetermined number of consecutive pagings, for example three, achieve the same response.

The paging rate may be increased if a change is detected, to allow such consecutive pagings to take place over a shorter timescale than would otherwise be the case, this identifying a change more quickly. The paging rate may also be varied according to the detected signal level, so that if a handset is close to the limits of the range, and this likely to make a transition, that transition is identified more readily.

The detector 13 may have a second mode of operation, in which it can detect the presence of the handset 3a in a cradle 16. If the base station has more than one associated handset the detector 13 can be arranged to identify which handsets are present. The cradle 16 may be arranged to identify each individual handset. The cradle 1 6 may also serve as a battery charger for the handset 3a, and one possible way in which the recognition of the handset may be achieved is by providing a different configuration of electrical connections on each handset 3a, 3b, compatible with different terminals on the cradle 16, such that the cradle can detect which of its terminals are connected to the handset 3a or 3b, and therefore which handset is in the cradle 16.

There may be more than one cradle 16, to allow several handsets to be stored, or their batteries charged, simultaneously. Each handset may have its own dedicated cradle, so that occupancy of a given cradle indicates the presence of its respective handset. Alternatively, each cradle may be able to accommodate any handset, and have means as described above for identifying the handset currently occupying it.

It is, of course, possible to arrange that the handset continues to be paged by the wireless system whilst it is in the cradle. Alternatively the cradle may be arranged to detect whether it is occupied, the handset being paged when it is first put into the cradle and, once it responds, its presence in the cradle being then inferred as long as the cradle remains occupied. Paging would be resumed when the cradle is vacated.

The controller 11 compiles its instructions to the call processor according to both the manual input from the input device 15 and the output of the detector 13. If all calls intended for the "primary number" are to be diverted to the cellular number when the cordless handset is not detected, the controller 11 sets up a call divert using a call divert unit 14 to transmit the necessary DTMF signals to instruct the exchange in the PSTN 7 that calls to the "primary number" of the relevant handset are to be diverted to the "remote number", which is the cellular directory number associated with the handset 3a. Calls intended for the "alternative number" remain undiverted.

This arrangement allows automatic diversion to the remote number of all calls made to the "primary number" of the handset 3a whenever the handset 3a is out of range of the base station 2, and the cancellation of such diversions when the handset comes within range of the base station 2, without any need for manual input by the user. Indeed the user need not be aware whether he is within or outside range of the base station 2.

The user input 1 5 may be used to programme that calls are only to be diverted by the controller 11 at certain times, by programming the controller 11 to override the indication from the detector at other times.

Further features may be added if a Call Transfer feature is available. If it is desired that calls to a specified primary number (e.g. having a predetermined CNI) are to be selectively routed to the remote number, for example only if they have a specified category of CLI, and/or only if they are not answered by the handset 3b, the controller does not direct the call divert unit 14 to set up a call divert for all incoming calls. Instead, incoming calls are handled individually by the call processor 20, which can transfer incoming calls to other exchange lines if required. In this case it is only necessary to page the handsets when an incoming call attempt is made.

The operation of the call processor unit 20 and its peripherals will now be described.

The call processor unit 20 is configured by the control unit 11 to handle different types of incoming calls in different ways according to a number of inputs made at the time that the incoming call is made. These inputs are:
1) the time, as indicated by a clock 24,
2) the called number (i.e. primary or alternative) as determined by the called number indicator 22,
3) the calling line as indicated by the Calling Line Identifier 23.

The called number is identified by means of a ringing current detector 21, which detects the pulses of ringing current, and the pattern of this ringing current is transferred to the called number identifier 22 to determine which ringing cadence is being sent from the PSTN exchange 7, and therefore which of the directory numbers associated with the exchange line 6 has been dialled. In the present example, with two possible numbers, the called number identifier merely needs to identify whether the cadence is that dedicated to one of the numbers (e.g. the "primary number"); any other cadence must, by default, be that for the other number. The original purpose of providing different ringing sequences is to allow users to recognise which number has been dialled, and therefore to answer the call appropriately, and therefore in practice ringing sequences are selected which can be readily distinguished by human beings. However, provided that the ringing current detector 21 and called number identifier 22 can distinguish them, more subtle differences in ringing cadence may be used in the system of the invention.

The call processor 20 acts upon the various inputs, according to its programming, to route the call only to certain of the equipments 3a, 3b, 4 and 5 equipments. If no response is received from the selected equipment 3a, 3b, 4, 5, this fact is detected by a response detector 25. The response detector 25 counts the number of pulses of ringing current received, and if a predetermined number of pulses is reached instructs the call processor 20 to move to the next condition in the hierarchy.

In an optional initial step, if Call Transfer is available and selected, the call is transferred by means of the call transfer unit 26. The call transfer unit 26 transmits a message via the line 6 to the PSTN 7 instructing it to transfer the call to the remote number, for example the cellular number associated with the handset 3a. On receiving an incoming call the call processor 20 first earths the connection 6 from the PSTN 7, using the earthing switch 30, which performs the same function as the 'R' or "recall" button on a conventional telephone in order to 'park' the call in the PSTN 7. In the event that the call is not to be answered at all, the connection simply remains "parked", until the caller hangs up. It will be appreciated that other signals, such as a "loop disconnect", may be recognisable by the PSTN as a "recall" signal, and the earthing switch 30 may be replaced by a generator of any such signal recognisable by the PSTN with which the equipment is to work.

An additional feature of the call processor unit will now be described. This feature allows the caller 10, as well as the called party, to have a say in how the call is answered. From some or all categories of call, when the call processor unit 20 detects an incoming call having a specified CLI and CNI, and in accordance with the time of day, it answers the call (i.e. it goes "off-hook"), and instructs an option generator 27 to transmit a prompt to the caller 10. This prompt is a voice-generated "menu" offering the caller 10 certain options. These options are selected by the call processor unit 20 in accordance with the programming from the control unit 11. For example the options can be selected according to the individual call's CLI and CNI, the time of day and the presence or absence of the handsets 3a, 3b. The options generated by the option generator 27 are processed into a voice message by a caller prompt unit 28 for transmission over the PSTN 7 to the caller. The voice message invites the caller 10 to transmit a selection using voice commands or DTMF tones. The selection is received back from the caller 10 by way of the PSTN exchange 7 and exchange line 6 and is decoded by a DTMF decoder 29 to identify which of the offered options has been selected. The option selected is input into the call processor unit 20 from where the selected handset 3a, 3b, fixed telephone 4, or answering machine 5 is activated. In the event that the selected handset is not answered the response detector 25 causes the call processor unit 20 to either default to another condition as already described, or to return to the option generator 27 to offer a revised list of options, omitting the option which failed.

By setting up call diversion in the network when possible, instead of using the call transfer unit 26, such diverted calls can be connected more quickly, and without the need for the involvement of the user's call handling unit 1 or the exchange connection 6 for each call. In particular, it allows such calls to be diverted even if the exchange connection 6 is in use.

Other variations on this embodiment are also possible within the scope of the claims. For example, if the scheduling feature is not required, the clock 24 can be dispensed with. In this case, all call handling would be processed according to manual inputs and the detection (or otherwise) of handsets.

## Claims

1. A cordless telephone base station (1) comprising means (6) for connection to an exchange connection of a telecommunications network (7); wireless communication means (2) for establishing wireless communication with one or more handsets (3a) to enable telephone communication between the handsets (3a) and the telecommunications network (7); paging means (12) for transmitting a wireless paging signal to the or each handset (3a); and handset detection means (13) for detecting a response, transmitted by the handset (3a), to such a paging signal; **characterised in that** the base station has call handling means (11) for generating call diversion instructions and means (14) for transmitting said call diversion instructions over the exchange connection to cause the network to direct incoming calls to the said exchange connection (6) or to a second connection according to the presence or absence of the handsets (3a) as detected by the paging signal responses, and
**in that** the second connection is specified in the call diversion instructions generated by the call handling means (11).

2. A cordless telephone base station according to claim 1, wherein the paging means (12) is arranged to send paging signals periodically, and is controlled by the detection means (13) such that if the detection means detects a response to a first paging signal, but fails to detect a response to the next paging signal, further paging signals are transmitted by the paging means (12) at a shorter time interval.

3. A cordless base station according to claim 1 or claim 2 the detection means (13) comprising means for measuring the strength of the response signal detected, and the paging means (12) being arranged to transmit paging signals at a rate related to the strength of the response signal.

4. A cordless telephone base station according to any preceding claim, wherein the wireless communication means (2) is arranged to establish wireless communication with more than one handset (3a, 3b); the call handling means having signal detection means (22, 23, 29) for detecting signalling received from the network (7) indicative of the calling party's identity and/or preferences, and connection selection means arranged to attempt communication with one of the handsets (3a, 3b), selected in response to signals detected by the signal detection means (22, 23, 29) and handset detection means (13).

5. A cordless telephone base station according to claim 4, further comprising caller interface means, the caller interface means comprising option generation means (27) for generating and transmitting messages inviting a calling party to transmit additional signalling to select one of the available handsets (3a, 3b), and caller response means responsive to such signalling to select such a connection.

6. A cordless telephone base station according to claim 5 wherein the signal detection means has means (22, 23, 29) for detecting signalling indicative of the preferences and/or the identity of the calling party and wherein the option generation means (27) is controlled to offer connections in response to signals detected by the signal detection means indicative of the calling party's identity and/or preferences.

7. A cordless telephone base station according to claim 6, having programming means (15) for programming the option generation means to select which connections are offered, according to the called and/or calling numbers detected.

8. A cordless telephone base station according to any of claims 4 to 7, wherein the signal detection means (22) is responsive to a ringing cadence or pattern, indicative of a calling party preference.

9. A cordless telephone base station according to any of claims 4 to 8, wherein one of the connections offered is to an answering machine.

10. A method of controlling the routing of calls directed over a telecommunications network (7) to a cordless telephone base station (1) connected thereto and arranged for wireless communication with one or more cordless handsets (3a, 3b), wherein the base station transmits wireless paging signals to one or more of said handsets, detects the presence or absence of responses to said paging signals, **characterised in that** the base station has call handling means (11) which generates call diversion instructions, and transmits said call diversion instructions over an exchange connection (6) to cause the network (7) to direct incoming calls to the said exchange connection or to a second connection, according to the detected presence or absence of said paging signals, and
**in that** the second connection is specified in the call diversion instructions generated by the call handling means (11).

11. A method according to claim 10, wherein paging signals are sent periodically, and if a response to a first paging signal is detected, but no response to the next paging signal is detected, further paging signals are transmitted at a shorter time interval.

12. A method according to claim 10 or 11, wherein the strength of the response signal is detected, and paging signals are transmitted at a rate related to the strength of the response signal.

13. A method according to claim 10, 11 or 12, wherein incoming calls are routed to individual handsets (3a, 3b) in response to signalling received from the network (7), and the presence or absence of said handsets.

14. A method according to claim 13, wherein the signalling is characteristic of the identity of the calling party and/or of preferences selected by the calling party.

15. A method according to claim 14, wherein the signalling is characteristic of the telephone number dialled by the calling party.

16. A method as claimed in claim 13, 14 or 15 wherein handset selection is made according to signalling initiated by the calling party in response to options offered by the base station, the options to be offered being selected according to the detected presence or absence of the handsets (3a, 3b) and/or the signalling received from the network (7).

17. A method according to claim 13, 14, 15 or 16 wherein the calls may be routed to an answering machine (5) or answering service.

18. A method according to claim 13, 14, 15, 16 or 17 wherein the calls may be routed to another of the handsets (3a, 3b).

## Patentansprüche

1. Basisstation (1) für ein schnurloses Telefon, die umfaßt:
- eine Einrichtung (6) zur Verbindung zu einer Vermittlungsstellenverbindung eines Telekommunikationsnetzwerks (7),
- eine schnurlose Kommunikationseinrichtung (2) zur Einrichtung einer schnurlosen Kommunikation mit einem oder mehreren Handapparaten (3a), um eine Telefonkommunikation zwischen den Handapparaten (3a) und dem Telekommunikationsnetzwerk (7) zu ermöglichen,
- Personenrufeinrichtung (12) zur schnurlosen Übertragung eines Personenrufsignals an den oder an jeden Handapparat (3a) und
- Handapparat-Erfassungseinrichtung (13) zur Erfassung einer über den Handapparat (3a) übertragenen Reaktion auf ein solches Personenrufsignal,
**dadurch gekennzeichnet, daß**
- die Basisstation eine Rufabwicklungseinrichtung (11) zur Erzeugung von Rufumleitungsbefehlen und eine Einrichtung (14) zur Übertragung der Rufumleitungsbefehle über die Vermittlungsstellenverbindung aufweist, wodurch das Netzwerk veranlaßt wird, ankommende Gespräche zur Vermittlungsstellenverbindung (6) oder zu einer zweiten Verbindung je nach dem Vorhandensein oder dem Fehlen der durch die Personenrufsignalreaktionen erfaßten Handapparate (3a) zu richten und daß
- die zweite Verbindung in den Rufumleitungsbefehlen spezifiziert ist, die von der Rufabwicklungseinrichtung (11) erzeugt werden.

2. Basisstation (1) für ein schnurloses Telefon nach Anspruch 1, wobei die Personenrufeinrichtung (12) so ausgeführt ist, daß sie periodisch Personenrufsignale sendet und so durch die Erfassungseinrichtung (13) gesteuert wird, daß wenn die Erfassungseinrichtung eine Reaktion auf ein erstes Personenrufsignal erfaßt, aber keine Antwort auf das nächste Personenrufsignal erfaßt, von der Personenrufeinrichtung (12) weitere Personenrufsignale in einem kürzeren Zeitabstand übertragen werden.

3. Basisstation (1) für ein schnurloses Telefon nach Anspruch 1 oder 2, wobei die Erfassungseinrichtung (13) umfaßt: eine Einrichtung zum Messen der Stärke des erfaßten Antwortsignals, und die Personenrufeinrichtung (12) so ausgeführt ist, daß sie Personenrufsignale in einer Rate überträgt, die auf die Stärke des Antwortsignals bezogen ist.

4. Basisstation (1) für ein schnurloses Telefon nach einem der vorhergehenden Ansprüche, wobei die schnurlose Kommunikationseinrichtung (2) so ausgeführt ist, daß eine schnurlose Kommunikation mit mehr als einem Handapparat (3a, 3b) eingerichtet werden kann, die Rufabwicklungseinrichtung (11) eine Signalerfassungseinrichtung (22, 23, 29) zur Erfassung der vom Netzwerk (7) empfangenen Zeichengabe aufweist, die die Identität der anrufenden Partei und/ oder Präferenzen anzeigt, und die Verbindungsauswahleinrichtung so ausgeführt ist, daß sie eine Verbindung mit einem der Handapparate (3a, 3b) herzustellen versucht, die in Reaktion auf Signale ausgewählt wurden, die von der Signalerfassungseinrichtung (22, 23, 29) erfaßt wurden, und eine Handapparat-Erfassungseinrichtung (13) aufweist.

5. Basisstation (1) für ein schnurloses Telefon nach Anspruch 4, die ferner umfaßt: eine Anruferschnittstelleneinrichtung, die eine Optionserzeugungseinrichtung (27) zur Erzeugung und Übertragung von Nachrichten enthält, die eine anrufende Partei dazu einladen, eine zusätzliche Zeichengabe zur Auswahl eines der verfügbaren Handapparate (3a, 3b) zu übertragen, und eine Anruferreaktionseinrichtung, die auf eine solche Zeichengabe anspricht, um eine solche Verbindung auszuwählen.

6. Basisstation (1) für ein schnurloses Telefon nach Anspruch 5, wobei die Signalerfassungseinrichtung eine Einrichtung (22, 23, 29) zur Erfassung einer Zeichengabe aufweist, die Präferenzen und/oder die Identität der anrufenden Partei anzeigt, und wobei die Optionserzeugungseinrichtung (27) derart gesteuert wird, daß sie Verbindungen in Reaktion auf Signale anbietet, die von der Signalerfassungseinrichtung erfaßt wurden, und die die Identität der anrufenden Partei und/oder Präferenzen anzeigen.

7. Basisstation (1) für ein schnurloses Telefon nach Anspruch 6, die eine Programmiereinrichtung (15) zur Programmierung der Optionserzeugungseinrichtung zur Auswahl aufweist, welche Verbindungen in Übereinstimmung mit den erfaßten rufenden und/oder angerufenen Nummern angeboten werden.

8. Basisstation (1) für ein schnurloses Telefon nach einem der Ansprüche 4 bis 7, wobei die Signalerfassungseinrichtung (22) auf eine Klingelkadenz oder ein -muster anspricht, das die Präferenz einer anrufenden Partei anzeigt.

9. Basisstation (1) für ein schnurloses Telefon nach einem der Ansprüche 4 bis 8, wobei eine der angebotenen Verbindungen eine Verbindung mit einem Anrufbeantworter ist.

10. Verfahren zur Steuerung der Lenkung von über ein Telekommunikationsnetzwerk (7) gerichteten Anrufen zu einer Basisstation (1) für ein schnurloses Telefon, die damit verbunden ist und die für eine schnurlose Kommunikation mit einem oder mehreren Handapparaten (3a, 3b) ausgeführt ist, wobei die Basisstation schnurlos Personenrufsignale an einen oder mehrere Handapparate überträgt und das Vorhandensein oder Fehlen von Reaktionen auf die Personenrufsignale erfaßt,
**dadurch gekennzeichnet, daß**
- die Basisstation eine Rufabwicklungseinrichtung (11) aufweist, die Rufumleitungsbefehle erzeugt und die Rufumleitungsbefehle über eine Vermittlungsstellenverbindung (6) überträgt, wodurch das Netzwerk (7) veranlaßt wird, ankommende Gespräche zur Vermittlungsstellenverbindung oder zu einer zweiten Verbindung, je nach dem erfaßten Vorhandensein oder dem Fehlen von Personenrufsignalen zu richten, und **daß**
- die zweite Verbindung in den Rufumleitungsbefehlen spezifiziert ist, die von der Rufabwicklungseinrichtung (11) erzeugt werden.

11. Verfahren nach Anspruch 10, wobei die Personenrufsignale periodisch gesandt werden, und wenn eine Reaktion auf ein erstes Personenrufsignal erfaßt, aber keine Reaktion auf das nächste Personenrufsignal erfaßt wird, weitere Personenrufsignale in einem kürzeren Zeitabstand übertragen werden.

12. Verfahren nach Anspruch 10 oder 11, wobei die Stärke des Antwortsignals erfaßt wird und Personenrufsignale in einer Rate übertragen werden, die auf die Stärke des Antwortsignals bezogen ist.

13. Verfahren nach Anspruch 10, 11 oder 12, wobei in Reaktion auf die vom Netzwerk (7) empfangene Zeichengabe und das Vorhandensein oder das Fehlen von Handapparaten, ankommende Rufe an einzelne Handapparate (3a, 3b) geleitet werden.

14. Verfahren nach Anspruch 13, wobei die Zeichengabe für die Identität der rufenden Partei und/oder die von der rufenden Partei gewählten Präferenzen charakteristisch ist.

15. Verfahren nach Anspruch 14, wobei die Zeichengabe für die Telefonnummer charakteristisch ist, die von der rufenden Partei gewählt wird.

16. Verfahren nach Anspruch 13, 14 oder 15, wobei die Handapparatauswahl in Übereinstimmung mit der Zeichengabe erfolgt, die von der rufenden Partei in Reaktion auf Optionen initiiert wurden, die von der Basisstation angeboten werden, wobei die anzubietenden Optionen gemäß dem erfaßten Vorhandensein oder Fehlen der Handapparate (3a, 3b) und/oder der vom Netzwerk (7) empfangenen Zeichengabe gewählt werden.

17. Verfahren nach Anspruch 13, 14, 15 oder 16, wobei die Anrufe zu einem Anrufbeantworter oder einem Anrufbeantworterdienst geleitet werden können.

18. Verfahren nach Anspruch 13, 14, 15, 16 oder 17, wobei die Anrufe zu einem anderen der Handapparate (3a, 3b) geleitet werden können.

## Revendications

1. Station de base pour téléphone sans fil (1) comprenant un moyen (6) de connexion à un central de réseau de télécommunications (7), un moyen de communication sans fil (2) destiné à établir une communication sans fil avec un ou plusieurs combinés (3a) pour permettre une communication téléphonique entre les combinés (3a) et le réseau de télécommunications (7), un moyen de recherche (12), destiné à émettre un signal de recherche sans fil vers le combiné ou chaque combiné (3a), et un moyen de détection de combiné (13) destiné à détecter une réponse, émise par le combiné (3a) à un tel signal de recherche, **caractérisée en ce que** la station de base comporte un moyen de gestion d'appel (11) destiné à générer des instructions de renvois d'appels et un moyen (14) destiné à transmettre lesdites instructions de renvois d'appels sur la connexion au central pour amener le réseau à diriger les appels entrants vers la connexion de central (6) ou vers une seconde connexion en fonction de la présence ou de l'absence des combinés (3a) tels qu'ils sont détectés par les réponses au signal de recherche, et **en ce que** la seconde connexion est spécifiée dans les instructions de renvois d'appels générées par le moyen de gestion d'appel (11).

2. Station de base pour téléphone sans fil selon la revendication 1, dans laquelle le moyen de recherche (12) est conçu pour envoyer périodiquement des signaux de recherche et est commandé par le moyen de détection (13) de sorte que, si le moyen de détection détecte une réponse à un premier signal de recherche, mais ne réussit pas à détecter une réponse au signal de recherche suivant, d'autres signaux de recherche sont émis par le moyen de recherche (12) à des intervalles de temps plus courts.

3. Station de base pour téléphone sans fil selon la revendication 1 ou la revendication 2, dans laquelle le moyen de détection (13) comprend un moyen destiné à mesurer l'intensité du signal de réponse détecté, et le moyen de recherche (12) est conçu pour émettre des signaux de recherche à une fréquence liée à l'intensité du signal de réponse.

4. Station de base pour téléphone sans fil selon l'une quelconque des revendications précédentes, dans laquelle le moyen de communication sans fil (2) est conçu pour établir une communication sans fil avec plus d'un combiné (3a, 3b), le moyen de gestion d'appel comportant un moyen de détection de signal (22, 23, 29) destiné à détecter une signalisation reçue du réseau (7) indiquant l'identité et/ou les préférences de l'appelant et un moyen de sélection de connexion conçu pour tenter une communication avec l'un des combinés (3a, 3b), sélectionné en réponse aux signaux détectés par le moyen de détection de signal (22, 23, 29) et le moyen de détection de combiné (13).

5. Station de base pour téléphone sans fil selon la revendication 4, comprenant en outre un moyen d'interface de l'appelant, le moyen d'interface de l'appelant comprenant un moyen de génération d'options (27) destiné à générer et émettre des messages invitant un interlocuteur appelant à émettre une signalisation supplémentaire pour sélectionner un des combinés disponibles (3a, 3b) et un moyen de réponse à l'appelant répondant à une telle signalisation afin de sélectionner une telle connexion.

6. Station de base pour téléphone sans fil selon la revendication 5, dans laquelle le moyen de détection de signal comporte un moyen (22, 23, 29) destiné à détecter une signalisation indicative des préférences et/ou de l'identité de l'interlocuteur appelant et dans laquelle le moyen de génération d'options (27) est commandé en vue de proposer des connexions en réponse aux signaux détectés par le moyen de détection de signal indicatifs de l'identité et/ou des préférences de l'appelant.

7. Station de base pour téléphone sans fil selon la revendication 6, comportant un moyen de programmation (15) destiné à programmer le moyen de génération d'options afin de sélectionner quelles connexions sont proposées, en fonction des numéros de l'appelé et/ou de l'appelant détectés.

8. Station de base pour téléphone sans fil selon l'une quelconque des revendications 4 à 7, dans laquelle le moyen de détection de signal (22) répond à une cadence ou à un motif de sonnerie indicatif d'une préférence de l'interlocuteur appelant.

9. Station de base pour téléphone sans fil selon l'une quelconque des revendications 4 à 8, dans laquelle l'une des connexions proposée est vers un répondeur.

10. Procédé de commande de l'acheminement d'appels dirigés sur un réseau de télécommunications (7), vers une station de base pour téléphone sans fil (1) reliée à celui-ci et conçue pour une communication sans fil avec un ou plusieurs combinés sans fil (3a, 3b), où la station de base émet des signaux de recherche sans fil vers un ou plusieurs desdits combinés, détecte la présence ou l'absence de réponses auxdits signaux de recherche, **caractérisé en ce que** la station de base comporte un moyen de gestion d'appel (11) qui génère des instructions de renvois d'appels et transmet lesdites instructions de renvois d'appels sur une connexion à un central (6) pour amener le réseau (7) à diriger les appels entrants vers ladite connexion à un central ou vers une seconde connexion en fonction de la présence ou de l'absence détectée desdits signaux de recherche, et **en ce que** la seconde connexion est spécifiée dans les instructions de renvois d'appels générées par le moyen de gestion d'appel (11).

11. Procédé selon la revendication 10, dans lequel les signaux de recherche sont émis périodiquement, et, si une réponse à un premier signal de recherche est détectée, mais qu'aucune réponse au signal de recherche suivant n'est détectée, d'autres signaux de recherche sont émis à un intervalle de temps plus court.

12. Procédé selon la revendication 10 ou 11, dans lequel l'intensité du signal de réponse est détectée et des signaux de recherche sont émis à une fréquence qui est fonction de l'intensité du signal de réponse.

13. Procédé selon la revendication 10, 11 ou 12, dans lequel des appels entrants sont acheminés vers des combinés individuels (3a, 3b) en réponse à une signalisation reçue du réseau (7) et à la présence ou à l'absence desdits combinés.

14. Procédé selon la revendication 13, dans lequel la signalisation est caractéristique de l'identité de l'interlocuteur appelant et/ou des préférences sélectionnées par l'interlocuteur appelant.

15. Procédé selon la revendication 14, dans lequel la signalisation est caractéristique du numéro de téléphone composé par l'interlocuteur appelant.

16. Procédé selon la revendication 13, 14 ou 15, dans lequel la sélection du combiné est faite en fonction de la signalisation initiée par l'interlocuteur appelant en réponse aux options proposées par la station de base, les options devant être proposées étant sélectionnées en fonction de la présence ou de l'absence détectée des combinés (3a, 3b) et/ou de la signalisation reçue du réseau (7).

17. Procédé selon la revendication 13, 14, 15 ou 16, dans lequel les appels peuvent être acheminés vers un répondeur (5) ou un service de réponse.

18. Procédé selon la revendication 13, 14, 15, 16 ou 17, dans lequel les appels peuvent être acheminés vers un autre des combinés (3a, 3b).
